# EUROPEAN PATENT SPECIFICATION

(11) **EP 2 748 781 B1**
(45) Date of publication and mention of the grant of the patent: **17.10.2018**
(21) Application number: 12826129.4
(22) Date of filing: 22.08.2012
(51) Int. Cl.: G06Q 30/02, G06Q 20/40, H04L 9/32, H04L 29/08, H04L 29/06, G06F 21/31

(54) **MULTI-FACTOR IDENTITY FINGERPRINTING WITH USER BEHAVIOR**
ZWEI-FAKTOR-IDENTITÄTSFINGERABDRUCKVERFAHREN MIT BENUTZERVERHALTEN
PRISE D'EMPREINTE D'IDENTITÉ À FACTEURS MULTIPLES AVEC COMPORTEMENT D'UTILISATEUR

(30) Priority: 25.08.2011 US 201161527469 P; 09.09.2011 US 201113229481
(43) Date of publication of application: 02.07.2014
(73) Proprietor: T-Mobile USA, Inc., Bellevue, WA 98006-1350 (US)
(72) Inventor: GIARD, Jeffrey, M., Bellevue, WA 98006-1350 (US); GOO, Michael, J., Bellevue, WA 98006-1350 (US); SUBRAMANIAN, Bala, Bellevue, WA 98006-1350 (US); SCHULER, Seth, H., Bellevue, WA 98006-1350 (US); SANDIDGE, Tony, A., Bellevue, WA 98006-1350 (US)
(74) Representative: Grünecker Patent- und Rechtsanwälte PartG mbB
(86) International application number: PCT/US2012/051927
(87) International publication number: WO 2013/028794

(56) References cited:
- WO-A2-2011/008848
- JP-A- 2002 288 070
- US-A1- 2006 265 495
- US-A1- 2007 025 245
- US-A1- 2009 258 637
- US-A1- 2010 125 505
- US-A1- 2010 299 292
- US-B1- 7 433 960

## Description

Today's users have daily interaction with a plethora of information systems. One example is where users interact with personal information systems such as their personal social network accounts. Another example is where users interact with commercial information systems, such as a store's point of sale system by making a purchase, or with a cellular provider's billing system by placing a mobile call. Yet another example is where users interact with government information systems, such as in maintaining Social Security and tax records.

In many cases, the user greatly depends on the data in those information systems. When a user pays for an item, either online via an electronic marketplace, or offline in a bricks and mortar store in a point of sale system, the transaction should ensure that the credit/debit card used for payment corresponds to the user. Similarly, when a user registers with a government site and enters personal information the transaction should also should ensure that the identity of the person is authenticated. Specifically, authentication is the performing of tests to guarantee within a known degree of confidence that a user corresponds to a user identity when interacting with an information system.

Presently, authentication is performed by several common methods. Authentication is typically performed by verifying a user's indicia for that user's identity. The user's indicia are called credentials. A user's credentials may come in the form of a user proffering a known value, such as a password or personal identification number ("PIN"). A user's credentials may come in the form by a user proffering a token such as a proximity card, or a fingerprint or retina scan.

In general, authentication presently relies on credentials in the form of a user possessing a known value, or of a user physically holding a token. However identity theft can occur when known values based on memorization are hacked, or tokens are stolen or otherwise misappropriated. Furthermore, many information systems only authenticate users upon logging onto a system, and subsequently limit system requests to verify identity as not to constantly interrupt the user. Accordingly, there is an opportunity to improve security and prevent identity theft via identifying additional means of authentication.

US7433960 B1 relates to systems, methods and computer products for profile based identity verification over the internet. This document discloses systems, methods and computer products for profile-based identity verification over the Internet. Exemplary embodiments include a method for profiling a user on a network, the method including receiving an input of streams corresponding to network activities associated with the user, wherein the input of streams are received from one or more layers of the network, in response to receiving a request to supply specified-input, receiving a score function and a list of attributes to be monitored, classifying the input of streams into network-activity classifications, extracting values and attributes for the network-activity classifications, and placing the extracted values and attributes into data sets, calculating a score of the data sets, comparing the data sets to a database of activity-specific attributes and mapping the data sets to a class of individuals based on a value of the score and the comparison of the database of activity-specific attributes.

US2010299292 A1 relates to systems and methods for application-level security. This document discloses a system and method for application-level security. Application-level security refers to detecting security threats from functional user behavior. Information about functional user behavior is transformed into a behavior session.

WO2011008848 A2 relates to activity based on users' interests modeling for determining content relevance. This document discloses a method and apparatus for activity-based users' interests modeling for determining relevance of the content distributed to the users is provided. Modeling of the user's interests starts by collecting information about the actions that the user performed and about the contents that were associated with the actions. That information may be used to determine how much interest the user has had in the individual subjects up to date, and to determine which subjects became more or less important to the user over time

US2010125505 A1 relates to system for broadcast of personalized content. This document discloses to a system and method that allows an advertising content network to be notified when a user visiting web sites has satisfied some behavioral targeting criteria.

It is therefore the object of the invention to provide an improved method and system for generating an identity fingerprint.

This object is solved by the subject matter of the independent claims.

Preferred embodiments are defined by the dependent claims.

### BRIEF DESCRIPTION OF THE DRAWINGS

The Detailed Description is set forth with reference to the accompanying figures. In the figures, the left-most digit(s) of a reference use of the same reference numbers in different figures indicates similar or identical items.
FIG. 1 is a top level diagram illustrating an example multi-factor identity fingerprinting service collecting data relating to user historical activity for access via an example profile based authentication service.
FIG. 2 is an example hardware platform for multi-factor identity fingerprinting.
FIG. 3 is a flow chart of an example process for multi-factor identity fingerprinting.
FIG. 4 is a top level diagram illustrating an example application of multi-factor identity fingerprinting in the mobile media vertical.

### DETAILED DESCRIPTION

### Introduction

This disclosure describes multi-factor identity fingerprinting with user behavior. There is presently a high frequency of user interaction with a diversity of information systems. Accordingly, each user has a critical mass of interactions that may be tracked whose factors may be associated with a user's identity. Specifically, multiple factors relating to user behavior are stored in a profile and aggregated as a history of the user's behavior. A least some subset of the user's interactions stored in the profile may be used to generate an identity fingerprint that subsequently constitute a user's credentials.

A factor can be any pattern of observable values relating to a user interaction. These factors may then be used as input in generating an identity fingerprint. Example observable values may include tracking when a user accesses one of their social networking pages, tracking the web address of the page, tracking the time the page was accessed, or tracking particular action performed such as posting a new picture or entering a comment. When these observables are stored in a user profile, they are called historical activities. In particular, whenever an information system receives an event notification, that event notification may be stored as a historical activity in the user's profile. In general, these values are stored in a profile and used to determine factors such as usage patterns with one or more applications and/or one or more client devices, as well as the associated user preferences.

Usage patterns with applications and/or a client device are a factor that relates to tracking what data is accessed, and what application or client device features are typically availed to by a user. An example of a usage pattern is determining that www.mysocialnet.com is the most commonly accessed web site via a web browser called CoolBrowser.exe. However, usage patterns are but one consideration in generating a multi-factor identity fingerprint.

User behavior may be another factor. User behavior relates to correlations of usage patterns with other input other that the application or client device itself. An example might be determining a user typically accesses www.mysocialnet.com around 11:30AM every day, indicating that the user is updating their social network records during lunch breaks. Another example might be the user typically accessing www.fredspizza.com on rainy Sundays, indicating that the user does not typically go out for food when raining.

User preferences may be yet another factor. Applications and client devices typically have user setting indicating user preferences in using those applications and client devices respectively.

Usage patterns, user behavior and user preferences are only some factors that may be applied to multi-factor identity fingerprinting. The above factors are exemplary and not intended to be limiting. Essentially, a factor can be based on any values that may be detected and stored, and subsequently may be a potential factor used in multi-factor identity fingerprinting. Factors themselves may be either stored with the profile, or otherwise dynamically derived.

In multi-factor identity fingerprinting, at least a subset of a user's profile stored online becomes bound to that user. In some embodiments, the user's identity may be used as that user's credentials. In this way, the information system may authenticate or verify a user's identity at any time. The information system may have authentication capabilities able to access the user identity finger print or to query the user profile, built in-system itself, or alternatively may delegate those functions to a separate system.

In another embodiment, security attacks may be catalogued and aggregated. Since an information system does not rely on a password or a physical token, the information system may compare any event or notification during the user's session, compare it with the user's identity fingerprint, and determine whether the user's behavior is consistent with the identity fingerprint or alternatively consistent with a query against the user's profile. Since the identity fingerprint is readily accessible, there is no need to interrupt the user's session with requests for passwords or other tokens. Thus a larger set of security checks may be monitored. This information may be analyzed to identify patterns of security attacks/threat monitoring or for identity management.

In yet another embodiment, identity fingerprints may be used to discover categories of usage among users. Since the identity fingerprint provides a snapshot of a user's history, the identity fingerprint is very difficult to diverge from a user's actual or likely behavior. Accordingly, high confidence can be ascribed in comparing and aggregating different identity fingerprints. Identified categories may subsequently be used to direct advertising or to obtain business intelligence.

### Overview

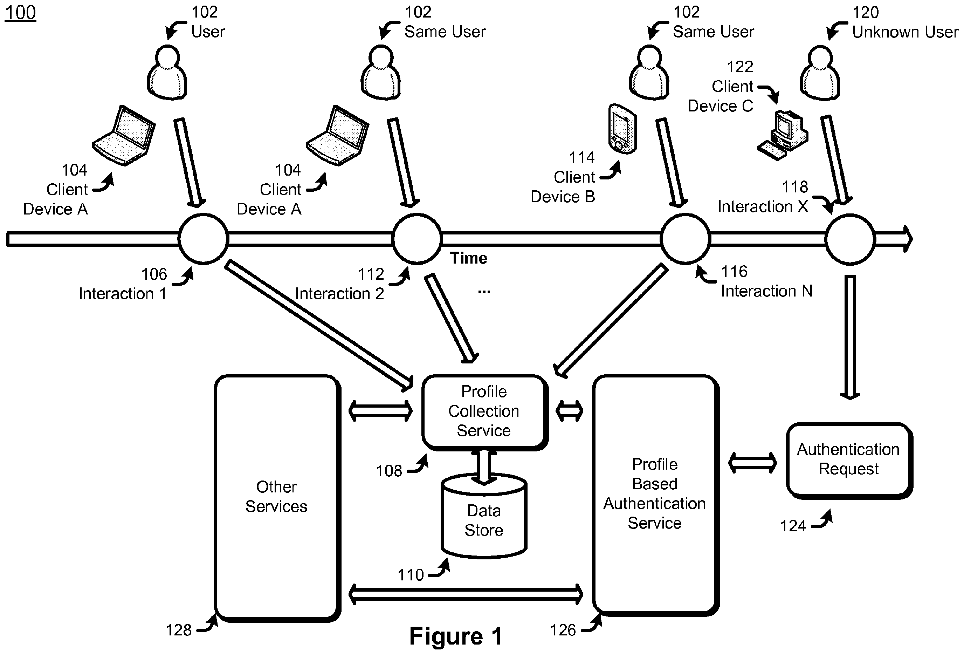

Figure 1 illustrates one possible embodiment of multi-factor identity fingerprinting 100. Specifically, it illustrates how a user 102 progresses over time and develops a historical profile and an identity fingerprint that may be used subsequently for authentication.

User 102 may have client device A 104 and use it to make an interaction 106 with an information system. Interaction 106 could possibly be user 102 using client device A 104 to access a web site called www.awebstore.com. User 102 may make some purchases during interaction 106.

Observable values collected during interaction 106 and subsequent interactions may be stored as historical activity records in a user profile via profile collection service 108. Specifically, the set of records of user 102's historical activities is user 102's profile. The information collected during interaction 106 and subsequent interactions are converted into one or more records of user 102's historical activities. After conversion, profile collection service 108 stores records of user 102's historical activities with user 102's profile in a data store 110.

As user 102 progresses over time, historical activity records of subsequent interactions are also collected in the user's profile. As shown via interaction 112, user 102 may later interact with a different information system using user client device A 104. For example, interaction 112 may be user 102 using user client device A 104 to update the user's social network records at www.mysocialnet.com. Again, user 102's historical activities during interaction 112's are captured by the profile collection service 108 and stored in data store 110.

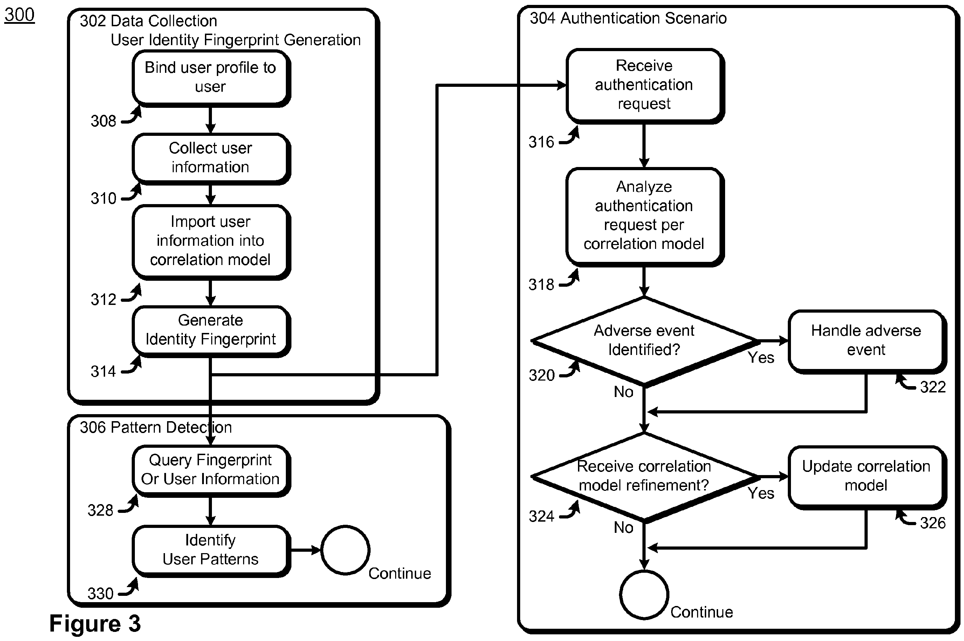

Accordingly, a user 102's profile need not be specific to a particular site or to a particular type of interaction. Any definable and observable user event whose parameters may be captured is a candidate for storing as one or more historical activity records for user 102's profile. Collecting event information and collecting parameters to create historical activity records is described in further detail with respect to Figure 3.

User 102's profile need not be specific to a particular client device. As shown via interaction 116, which may be after a number of other interactions, user 102 may use a different client device, here client device B 114 to interact with an information system. Interaction 116 could potentially be user 102 further updating user 102's social network records at www.mysocialnet.com, perhaps to upload a picture just taken with client device B 104. Again, profile collection service 108 converts interaction 116 into one or more historical records associated with user 102's activities and stores those records as part of user 102's profile in data store 110.

When the profile collection service 108 has stored a statistically significant amount of user historical records for a user's profile in data store 110, the user's profile may then be used to generate an identity fingerprint. As shown in interaction 118, an unknown user 120 using client device C 122 may attempt to edit user 102's social network records at www.mysocialnet.com. In fact unknown user 120 may be in possession of user 102's password and thereby log into user 102's account on www.mysocialnet.com.

During interaction 118, unknown user 120 may attempt to make a post to user 102's social network records at www.mysocialnet.com. The posting attempt may trigger an event trapped by www.mysocialnet.com, which in turn may make an authentication request 124 via profile based authentication service 126. The profile based authentication service 126 may then convert the posting attempt into user activity indicia that is comparable to user 102's profile. After conversion, profile based authentication service 126 may query data store 110 via profile collection service 108 for some subset of user 102's historical activity records. For example, authentication request 124 may limit retrieved records only to www.mysocialnet.com activity by user 102 over the past three years.

Profile based authentication service 126 may generate a summary file of the retrieved records into an identity fingerprint for the user. The identity fingerprint comprises a summary of the user's history and may take many potential forms. In one embodiment, the identity fingerprint may identify several different activities, and store the frequency the user performs those activities. In another embodiment, the identity fingerprint may store other users that the user's account may send information to. The identity fingerprint may be cached, such that in lieu of the profile based authentication service 126 generating the identity fingerprint dynamically, it may be served directly.

Profile based authentication service 126 may then correlate unknown user 120's activity against the identity fingerprint. For example, if unknown user 120's post is filled with words on a profanity list, and user 102 has never used profanity in www.mysocialnet.com postings, the profile based authentication service 126 may report a low correlation with respect to the identity fingerprint. If the correlation is sufficiently low, the profile based authentication service 126 may send an error message indicating that authentication failed. Alternatively, if the correlation is sufficiently high, the profile based authentication service 126 may send an authentication message indicating successful authentication. If there is insufficient information to provide a statistically significant conclusion, the profile based authentication service 126 may simply send a message indicating no conclusion. In this way, the profile based authentication service 126 may lower false positives during authentication.

In the preceding authentication discussion, note that unknown user 120 did not have to use the same client device as previously used by user 102. Rather than having physical possession of credentials, authenticating unknown user 120 was based on the user's profile, specifically as an identity fingerprint used as a credential and readily retrievable from data store 110. Furthermore, note that authentication using the identity fingerprint may operate independently or alternatively in conjunction with the www.mysocialnet.com's login authentication. Even though unknown user 120 had user 102's password credentials, those credentials were independently verified against the user's identity fingerprint credential via the profile based authentication service 126. Moreover, this authentication process was transparent to unknown user 120. In addition, the unknown user 120 cannot obtain the information from the user 102, since the behavioral aspects of user 102 is cannot be obtained through recollection and/or coercion. Accordingly, because of a lack of access to the profile based authentication process, unknown user 120 may have been able to hack or spoof www.mysocialnet.com's login, but unknown user 120 was not able to spoof the profile based authentication process as it uses historical behavioral attributes. Unknown user 120 simply could not have changed the user 102's history over the past three years of never posting profanity. In this way, profile based authentication provides a more secure authentication, and provides continuous authentication separate from login's and other means where a user must explicitly enter credentials.

How an information system, such as www.mysocialnet.com handles failed authentications may be left up to the information system itself, or may be based on how the profile based authentication service 126 is configured. For example for financial transactions or for transactions relating to sensitive personal information, the profile based authentication service 126 may be configured to simply block unknown user 120 from interacting with the information system. For less sensitive scenarios, the profile based authentication service 126 may be configured to require the unknown user 120 to proffer alternative credentials. For even less sensitive scenarios, the profile based authentication service 126 may be configured to simply send a notification in the form of electronic mail, text message, or other messaging services to user 102 that an unusual event occurred.

The profile based authentication service 126 may be configured to have multiple of correlation models. Each correlation model is a statistical model which specifies how to calculate a similarity score of the user event and historical event data in the user profile and/or the user identity fingerprint. The correlation model may be very simple where the presence of certain terms is sufficient to return a result of zero correlation. Alternatively, the correlation model may be very complex and may comprise learning algorithms with a varying degree of confidence. The profile authentication service 126 may combine different correlation models to derive additional confidence in authentication results. Confidence models are discussed in further detail with respect to Figure 3.

In this way, profile based authentication may be configured to meet the different authentication needs for different information systems. The profile based authentication service 126 may expose an application programming interface ("API") to be programmatically accessible to an arbitrary information system. For example, the profile based authentication service 126 may be used in conjunction with credit card companies to provide additional indicia as to the identity of an arbitrary user. In this way, the user need not be in possession of a client device. In fact the client device itself may be subject to authentication. For example, if a client device is used to make a long distance phone call to a remote location that the user never has accessed, the cellular service may make an authentication request 124 against the profile based authentication service 126 and may require the user provide additional credentials. The profile based authentication services can be configured to provide just the identity a specific verification answer, such as yes/no/ inconclusive, thereby protecting the subscribers privacy.

Since the profile based authentication service 126 is able to serve pre-calculated/pre-made user identity fingerprints, the profile based authentication service 126 may be used for non-authentication applications. For example, the profile based authentication service 126 may be queried by other services 128 for user identity fingerprints for analysis, and categories of user behavior may thereby be identified. These categories in conjunction with the histories of user behavior may be used for directed advertising or to generate general business intelligence.

If a service 128 desires to have access to more extensive data beyond the identity fingerprints, the service 128 can access the profile collection service 108 directly, which has a critical mass of user historical activities stored in data store 110. The services 128, such as business intelligence or advertising targeting services may access the user historical activity records in data store 110 via profile collection service 108 to perform queries unrelated to authentication. Other services 128 may include business intelligence and advertising applications as discussed above. However, they may also include servicing law enforcement data subpoenas, identity management, and threat management request.

With the wide range of information systems that may utilize identity fingerprints and user behavior profiles, the profile collection service 108 and profile based authentication service 126 may incorporate a billing system to monetize authentication and data requests. The billing system may be a separate module, or alternatively incorporated into both the profile collection service 108 and profile based authentication service 126. For example, the profile collection service 108 and profile based authentication service 126 may store records of each data and authentication request in data store 110 or other data store, which may then be queried to generate a bill. Alternatively, the profile collection service 108 and profile based authentication service 126 may store request counts by particular parties, and may generate a bill per alternative billing arrangements such as flat fees or service subscription models.

### Exemplary Hardware Environment for Multi-Factor Identity Fingerprinting

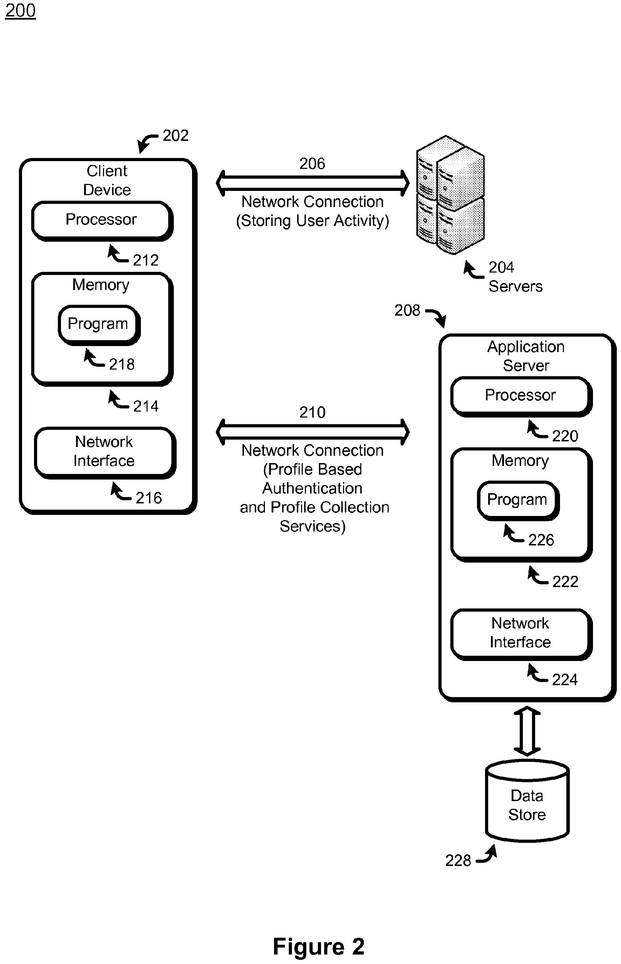

Figure 2 illustrates one possible embodiment of a hardware environment 200 for multi-factor identity fingerprinting. Specifically Figure 2 illustrates a client device 202 configured collect user historical activity data either on the client device 202 itself or alternatively hosted on servers 204 and accessed via network connection 206. Examples of historical activity data collected on the client device 202 itself include trapping keystrokes, accessing local data such as photos, or monitoring local application usage such as entering web addresses into internet browsers.

Figure 2 also illustrates the client device 202 configured to connect to the profile collection service 108 and/or profile based authentication service 126 as hosted on application server 208 via network connection 210.

Network connection 206 relates to client device 202 accessing information systems as part of user activity and network connection 210 relates to accessing the profile collection system 108 and/or profile based authentication system 126. Notwithstanding these different applications, both network connection 206 and network connection 210 may be any method or system to connect to remote computing device. This may be in the form of both wired and wireless communications. For example, the client device 202 may be personal computer on a wired Ethernet local area network or a wired point of sale system in a store. Alternatively, the network connections 206 and/or 210 may be wireless connections either via Wi-Fi for packet data or via cellular phone protocols which may include CDMA 2000, WCDMA, HSPA, LTE or successor cellular protocols. Accordingly, the preceding specification of network connections 206 and 210 is not intended to be limited by selection of network protocol.

In alternative embodiments, client device 202 might store user historical activity data or authentication requests locally. Interfacing with information system servers 204 or with profile based authentication application server 208 need not be via network collection. For example, locally stored user historical activity data or authentication requests may be stored on a portable memory stick and then used to manually access information servers 204 or profiled based authentication application server 208.

Client device 202 is any computing device with a processor 212 and a memory 214. Client device 202 may optionally include a network interface 216. Client device 202 may be a cellular phone including a smart phone, a netbook, a laptop computer, a personal computer, or a dedicated computing terminal such as a point of sale system terminal. Client device 202 would also include distributed systems such as a terminal accessing a centralized server as with web top computing.

Client device 202's memory 214 is any computer-readable media which may store include several programs 218 and alternatively non-executable data such as documents and pictures. Computer-readable media includes, at least, two types of computer-readable media, namely computer storage media and communications media. Computer storage media includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transmission mechanism. As defined herein, computer storage media does not include communication media.

Programs 218 comprise computer-readable instructions including operating system and other system functionality as well as user applications. The operating system may support the ability to trap application events. Trapping application events enables a program to capture observable data that may subsequently stored as a user historical activity record. Examples include, but are not limited to journaling hooks and trampoline functions. In general, a trapped application event may be associated with a programmatic handler which in turn stores input and/or output parameter data associated with the operation of the event. In this way, an arbitrary user event and interaction with application, may be monitored, associated data stored, and then processed for conversion into one or more user historical activity records.

User applications may include applications designed for local use such as word processors or spreadsheets. Local applications may include utilities such as programs to monitor local usage. Applications in this class may include, but are not limited to keystroke monitors and near field communication monitors. Alternatively, user applications may include applications such as web browsers or cloud clients designed to interact with a remote systems.

Application server 208 is any computing device capable of hosting profile collection system 108 and/or profile based authentication server 126. Application server 208 comprises processor 220, memory 222 and network interface 224. As per the preceding discussion regarding client 202, memory 222 is any computer-readable media including both computer storage media and communication media.

In particular, memory 222 store programs 226 which may include an operating system and computer-readable instructions for profile collection system 108 and/or profile based authentication server 126.

Memory 222 may also store programs 226 that may include a database management system if data store 228 is configured as a database. Data store 228 may be configured as a relational database, an object-oriented database, a columnar database, or any configuration supporting queries of user profiles and user historical activity data.

### Exemplary Operation of Multi-Factor Identity Fingerprinting

Figure 3 illustrates one possible embodiment of a multi-factor identity fingerprinting process 300. There are at least three different actors for multi-factor identity fingerprinting process 300, including: (1) the profile based authentication system, (2) a user being tracked and authenticated by the profile based authentication system and (3) a vendor or information system seeking to use the multi-factor identity fingerprinting system. Different actors will perceive different subsets of multi-factor identity fingerprinting process 300. In particular, the vendor or information system's perspective will vary depending on the application. Some systems will simply use the multi-factor identity fingerprinting system for authentication. Others will use the system to aggregate users and to identity usage patterns by a set of users.

The multi-factor identity fingerprinting process 300 as a whole may be subdivided into the following broad sub-processes:
1. Data Collection/User Identity Fingerprint Generation 302,
2. Authentication 304, and
3. Pattern Detection 306.

In block 308, a user profile is bound to a particular user. The user profile will contain the user's historical activity records, and will be used as to generate the user's identity fingerprint. Since the user's identity fingerprint will be used the user's credentials and accordingly, the binding must be accurate. The user profile need not be bound to a particular client device. However, the user profile may contain a record that the user always uses particular client devices.

Binding may be either static or dynamic. With static binding, a user may affirmatively create a user profile record with the profile based authentication system. In the record, the user may indicate client devices or applications typically accessed. From this information, the multi-factor identity fingerprinting system may more easily determine whether an incoming user historical activity record relates to a particular user profile. However, binding need not be static. Since the profile based authentication system's client devices may track indicia of user identity such as user logon information, the multi-factor identity fingerprinting system may aggregate records from similar logons independent of any static input from a user.

One advantage of dynamically binding user historical activity records to a particular user is to distinguish different users who happen to use the same user accounts. For example, a single family account may be used by the owner of the account, the owner's spouse and the owner's child. In this case, the profile based authentication system may correctly generate three profiles (and subsequently user identity fingerprints corresponding to each of the three profiles) rather than just one. Thus the multi-factor identity fingerprinting system not only is not tied to a client device, it is also not tied to a particular user login or account for an information system.

In block 310 the client device or information system the client device is interacting with collects user information. In one embodiment, a client device or information system enlists in a correlation model. The correlation model may specify particular user events, and for each user event may further specify data to be captured. The user event typically is an interaction with an application that may be captured by an operating systems eventing or notifications system. For example, if a user clicks on a button, the operating system may capture the button click, and as user information may capture the active application, the button identity along with the user identity. Furthermore, client device or information system may have an event handler that performs additional information lookup not specific to the captured event. For example, in addition to capturing the button click, the event handler may run a program to capture what other applications were open, or if there were any active network sessions.

Accordingly, the client device may capture a very wide range of user information. It is precisely because it is possible to capture a wide range of possible user information that user information captured may be limited to events specified by a correlation model and the specific data used by the correlation model for each event.

In block 312, user information is imported into the associated correlation model. In contrast to block 310 where the client device or information system is capturing raw user information, in block 312, the user information is converted into user historical activity records. Specifically, the user information is parsed, and then mapped to a format that may be imported by the profile collection service 108 into the data store 110, for subsequent retrieval by the profile based authentication service 126 or other services 128. For example, the raw data for a button click in an application called MyApp may come in the form of ("OKButton", UserBob, 12:12:00PM, MyApp). This raw data may be converted into the following record (Profile 111, MyApp:OKButton) through the following transformations:
(1) The account name UserBob may be mapped to a user profile with an identifier of Profile 111.
(2) The correlation model may have a format where the application and user interface element are concatenated together into a single field. In this example, OKButton and MyApp are converted to MyApp:OKButton.
(3) Some data may be eliminated as not relevant to a particular correlation model. In this example, the 12:12:00PM time was simply dropped.

Any number of transformations data actions may be performed against the raw user information prior to conversion into a user historical activity record. Third party data may be accessed for inclusion in the user historical activity record. For example, credit card identification or phone number identification information may be looked up and included in the user historical activity record. Additionally, data validation may be performed. For example, prior to loading a record via the profile collection service 108 into the data store 110, the client can perform record format validation and value validation checks.

Alternatively, event user information trapped need not be specific to a particular correlation model. In order for multiple correlation models to access the same data, there may be a universal user historical activity record specified. In this embodiment, a client device or information system may enlist in events rather than correlation models.

The user information converted into user historical activity records may be loaded into data store 110. Data store 110 may have a single database or multiple databases. Notwithstanding the number of databases used, data from multiple users from multiple client devices for multiple events may all be stored in data store 110.

In block 314, the multi-factor identity fingerprinting system generates a user identity fingerprint. The user identity fingerprint may be generated on demand or alternatively be proactively refreshed in an background process. At least a subset user historical records stored in a user's profile are used as the raw data to generate a user identity fingerprint. The user identity fingerprint is a summary of the user's history. The user identity fingerprint may be as simple as generating a single number used as a straightforward numerical score such as generating a credit rating or a grade for a class. In the alternative, the user identity fingerprint may provide a parcel of data summarizing relevant user activity. For example, if a requesting system is interested in the creditworthiness of a user, the fingerprint might report the number of bounced checks, the number of credit card rejections, and the number of returns a user performed at a store. Data in the identity fingerprint need not be numerical. By way of another example, if a requesting system is interested as to whether a user typically engages in profanity on a website, the identity fingerprint may simply store a Boolean value. Data in the identity fingerprint need not be limited to data collected by a single system, but may be combined with external data. By way of yet another example, an identity fingerprint may combine a number of bounced checks with a record of times a user was arrested for credit card fraud.

User profiles and user identity fingerprints may be used in any number of ways. Two potential embodiments are authentication of which one example is shown in 304 and pattern detection of which one example is shown in 306.

Authentication scenario 304 is from the perspective of the multi-factor identity fingerprinting system servicing a vendor's information system request to authenticate a user. In block 316, an information system will trap an event that the information system is programmed to perform a profile based authentication request. In one embodiment, the information system, will trap the event and associated user data, convert the data into one or more user historical activity record as described with respect to block 312. These user historical activity records will be used as indicia of user activity and submitted as part of an authentication request 124 to the profile based authentication service 126.

Indicia of user activity may include a broad range of potential values. Table 1 enumerates some potential indicia values:

**Table 1. Exemplary User Indicia**

| **Indicia** | **Example** |
|---|---|
| Location | Global Positioning Satellite Coordinates |
| Calling Pattern | Whether a call was made to a commonly contacted individual or not |
| Near Field Communications Activity | The cost of a purchase made using near field communication capabilities |
| Internet Activity | The web address accessed during an internet session |
| Short Message Service | The contents of a text message |
| Social Network | The contents of updates made to a social network site |
| Payment History | Creditworthiness of user |
| Client Device History | Determining if the client device used is one of client devices commonly used by the user |
| Usage Patterns | Keystroke patterns used during a session |

Table 1 is not intended to be an exhaustive list of user indicia. User indicia may come from third parties, such as credit checks. User indicia may be provided via interfaces to other information systems.

In block 318, the profile based authentication service 126 receives the authentication request 124, and proceeds to analyze the authentication request 124. Analysis may comprise identifying a correlation model corresponding to the authentication request 124. The identified correlation model will then specify user historical activity records to retrieve from data store 110. The correlation model will then determine if the user indicia in the authentication request 124 is similar to the retrieved user historical activity records. In some embodiments, a correlation model will identify content patterns, for example comparing the degree of profanity in the user indicia in the authentication request 124 to historical patterns. In other embodiments, a correlation model will identify usage patterns, for example determining if a credit card payment is made immediately after browsing a web site when in contrast the user historically views the same web site at least a dozen times prior to committing to a purchase. In yet other embodiments, the correlation model could track behavioral patterns where the user updates a social network record only during lunch time.

Analysis may work with an arbitrary subset of user historical activity records as stored. Accordingly, the analysis may compares results from different correlation models before making a final determination of correlation.

Regardless of the correlation model used, the correlation model may identify the degree of correlation, for example in the form of a similarity score, and will determine whether the similarity score exceeds a particular threshold. Alternatively, the correlation model may indicate that confidence in a particular determination is insufficient and will make no determination. For example, analysis may determine that the correlation model has insufficient user historical activity records to make a determination.

Thresholds for whether correlation is sufficiently high to warrant authentication may differ based on the information system making the authentication request. Financial transactions and personal information may require high thresholds. Alternatively, general web sites may require relatively low thresholds. Thresholds may vary according to the scope of interaction of the user. For example, a per transaction authentication may have a lower threshold than a per session authentication. Similarly a per session authentication may have a lower threshold than an interaction that spans multiple sessions. Different vertical applications may have different thresholds. For example, a medical information system may have a higher threshold than an entertainment application.

Analysis results may be shared in many different ways. A common scenario may be to send a message indicating either authentication, or an error message indicating either insufficient data or rejecting authentication. Alternatively, the analysis results may be accessed directly through an exposed application programming interface ("API"). By way of yet another example, the analysis results may be aggregated into a single similarity score and exported for use by other applications or scenarios. For example, a contest web site may determine that it is 70% confident that a user is who the user claims to be. Based on the 70% confidence value, it may limit contest prizes to lower values than if it had 100% confidence.

In block 320, if the analysis in block 310 determines that the user authentication request fails, then this is termed an adverse event. Adverse events may be determined either substantively in real time, for example if the information system making an authentication request is an interactive system. Alternatively, adverse events may be determined in batch, for example in collecting disputed charge records which are to be presented to the user in a monthly bill.

Once an adverse event is identified, the adverse event is handled in block 322. Just as adverse events may be determined in real time or alternatively in batch, the adverse event may be handled in real time or alternatively in batch as well.

Real time handling of adverse events may include shutting the user out of the system, or providing a modal dialog box requiring the user to proffer alternative user credentials. For less critical scenarios, adverse events may simply be captured, and notification sent to the user via electronic mail, text messaging, or other forms of asynchronous communications.

In block 324, the profile based authentication service 126 may receive a request to correct a correlation model. Correlation models may be refined, or may be replaced. For example, if the profile based authentication service 126 determines that there is a high degree of false positives where authentication is rejected, but the unknown user is able to proffer correct alternative credentials, the correlation model may be marked as flawed or subject to correction, refinement or replacement in block 326.

Turning to a pattern detection scenario 306, a service 128 may perform data mining on the user profiles, the user identity fingerprints, or both.

In block 328, a service 128 determines the desired data and performs a data query against the user profiles, the user identity fingerprints, or both. The data query may be in the context of some external correlation model. When querying user identity fingerprints, the query may retrieve pre-generated identity fingerprints corresponding to a time period. Alternatively, the query may request new user identity fingerprints to be generated dynamically with the most recent data.

In block 330, the service 128 applies an external correlation model to determine patterns of users corresponding to the retrieved data. The patterns may relate to the users themselves, such as in identifying popular products purchased. In another example, the patterns may relate to the historical user activity such as identifying the most common scenarios that authentication requests failed (e.g. in threat assessment). By way of another example, the external correlation model results may be analyzed to detect errors in the multi-factor identity fingerprinting system, thereby providing a sort of debug facility.

### Exemplary Profile Based Authentication Application - Mobile Media

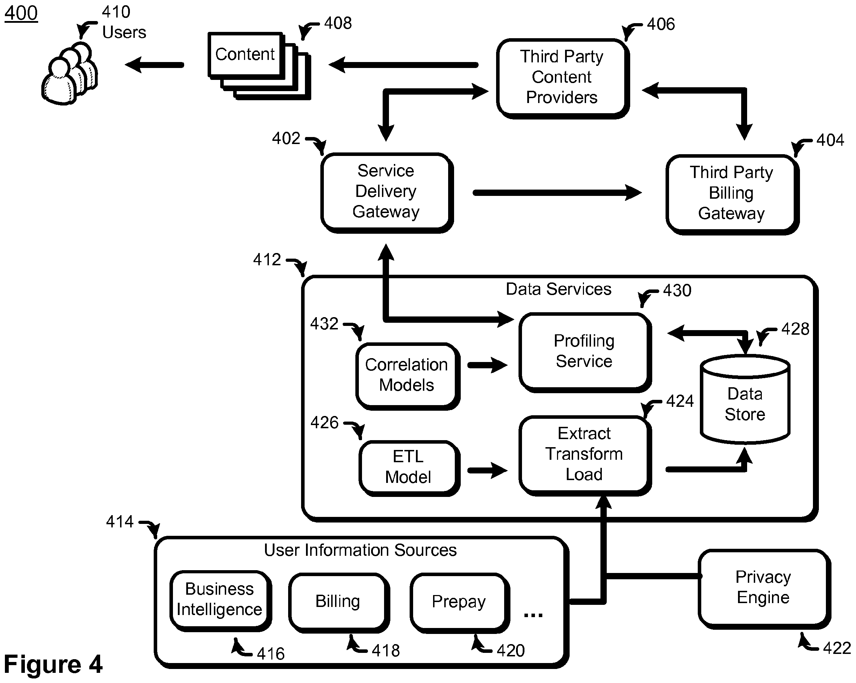

Figure 4 illustrates an exemplary application of multi-factor identity fingerprinting 400. Specifically, Figure 4 illustrates loading existing user profile information and applying multi-factor identity fingerprinting for mobile device multimedia content requests on mobile devices 400 in a Service Delivery Gateway ("SDG") 402 and Third Party Billing Gateway ("3PG") 404 infrastructure.

Consider a Wideband Code Division Multiple Access ("WCDMA") cellular provider. Third party content providers 406 wish to serve paid content 408 to users using mobile devices 410 over the WCDMA provider. One possible configuration for a WCDMA network to support third party data services is to use an SDG 402 to interface with Data Services 412. When content is served by the SDG 402, billing is handled by the 3PG 404.

Since the content is for pay, it may be desirable to implement multi-factor identity fingerprinting to ensure that served content was in fact ordered by a user.

First a critical mass of profile information must be collected for the profiles. Cellular providers already have a wide range of user information sources 414. Sources may include pre-existing business intelligence sources 416 such as credit scores and default rates, billing information 418 for cellular subscriptions, and prepay information 420 for prepay cellular customers. Information from these user information sources 414 may be loaded into the data services layer 412 which is optionally filtered via a privacy engine 422.

The information from the user information sources 414 is loaded via an extract transform and loading routine ("ETL") 424 as informed by a ETL Model 426 and then converted into profiles for storage into data store 428. The ETL Model 426 may be comprised of a data model and several rules and constraints.

Once the profiles are loaded, the SDG 402 may perform authentications via profiling service 430. Specifically, an unknown user 410 makes a content request of a third party content provider 406. The SDG 402 may have a local profiling client or may directly perform authentication by accessing the profiling service 430. The profiling service will access records via data store 428. According to one or more correlation models 432, the profiling service 430 will return a message indicating whether to authenticate, to reject, or whether there is insufficient information to make a determination.

If the unknown user 410 is authenticated, the SDG 402 and the third party content provider 406 will serve the requested content 408 to user 410, and third party content provider 406 will have the 3PG 404 bill the user 410 as authenticated by SDG 402.

Otherwise, the third party content provider 406 will reject the request. Optionally, the third party content provider 406 may generate a report or send a notification to the account owner of the failed authentication.

### Conclusion

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method to generate an identity fingerprint, the method comprising:
maintaining a data store (110) of records, the records relating to historical activities by a plurality of users (102, 120) and the records having been aggregated according to a behavioral correlation model (432);
receiving (302) an identity fingerprint request to generate an identity fingerprint for a user (102), the request comprising indicia of the user's activity;
retrieving at least one record from the data store (110) corresponding to the indicia of the user's activity in the identity fingerprint request, wherein the retrieved record from the data store is retrieved dynamically via querying the data store for a record corresponding to the indicia of the user's activity in the identity fingerprint request;
generating (314) an identity fingerprint from the at least one retrieved record; and
serving (302) the generated identity fingerprint responsive to the received identity fingerprint request.

2. The method of claim 1, wherein the generated identity fingerprint comprises a summary of historical activities of the user.

3. The method of claim 1, wherein the generated identity fingerprint comprises a summary of content entered by the user during at least one historical activity.

4. The method of claim 1, further comprising collecting behavioral data for generating identity fingerprints, comprising:
receiving a session initiation request, the session initiation request comprising a user identifier;
activating a user profile corresponding to the user identifier, the user profile comprising a plurality of events of interest;
transmitting the plurality of events of interest to the client device (104) associated with the user profile for registration;
receiving (310) a plurality of user historical activity indicia, each indicia corresponding to at least one event registered on the client device responsive to a user input triggering at least one registered event;
converting the received plurality of user historical activity indicia into a format specified by a correlation model (432);
storing (312) the user historical activity indicia in the data store (110) with other user historical activity indicia from other sessions; and
aggregating (312) the user historical activity indicia according to the correlation model (432).

5. The method of claim 4, wherein the user historical activity indicia are aggregated with third party data according to the correlation model.

6. The method of claim 4, wherein the other user historical activity indicia is from other client devices.

7. The method of claim 4, wherein the user historical activity indicia includes any one of:
user location,
user calling pattern,
user near field communications activity,
user internet activity,
user short message service activity,
user social network activity,
user payment history,
user client device history, or
user usage pattern.

8. The method of claim 1, further comprising aggregating users into categories, comprising:
generating (314) an identity fingerprint for each of the plurality of users (102, 120), each identity fingerprint having been generated according to an aggregate of records according to a behavioral correlation model (432); and
aggregating the identity fingerprints into categories according to a similarity measure.

9. The method of claim 8, wherein the categories to aggregate the fingerprints includes any one of:
targeted customer categories for targeted advertising,
targeted customer categories for identifying purchase patterns, or
categories of computer security attacks as part of a threat model.

10. The method of claim 1, further comprising authenticating an identity of a user, comprising:
receiving at least one indicia of a user's activity;
preparing an authentication request (124), the authentication request (124) comprising the at least one indicia of the user's activity;
sending the prepared authentication request (124) to a profiling service (108, 126), the profiling service (108, 126) having access to the data store (110) of records; and
receiving an authentication determination based on whether the indicia of the user's activity in the authentication request (124) correlates to at least one record in the data store (110), the correlating of the authentication request (124) to the at least one record being based at least in part on a correlation model (432).

11. The method of claim 10, the method further comprising:
upon determining that an authentication request does not correlate to at least one record, performing any one of the following responses:
sending an indicator to terminate the user session,
logging a failed authentication,
sending an email message of the failed authentication,
sending a text message of the failed authentication, or
triggering a system administrator alert.

12. A system to generate identity fingerprints, the system comprising:
a profile collection service (108) hosted on a computing device (208);
a profile based authentication (126) service hosted on a computing device (208), operably connected to the profile collection service (108); and
a data store (110) hosted on a computing device (128) and operably connected to the profile collection service (108), wherein:
the profile collection service (108) is operable to receive correlation model information from the profile based authentication service (126), to transmit event information according to the correlation model (432), to receive user historical indicia according to the correlation model (432), and to store the received user historical indicia in the data store (110),
the profile collection service (108) is operable to generate an identity fingerprint based on some of the stored user historical indicia and further based on at least one retrieved record, wherein the retrieved record from the data store is retrieved dynamically via querying the data store for a record corresponding to the indicia of the user's activity in the identity fingerprint request, and
the profile collection service (108) is operable to serve at least one generated identity fingerprint.

13. The system of claim 12, the system further comprising:
a cache memory operably connected to the profile collection service, the cache memory storing at least one generated identity fingerprint;
wherein the profile collection service is operable to serve at least one generated identity fingerprint from the cache memory.

14. The system of claim 12, the system further comprising any one of the following:
an application programming interface to the profile collection service exposed to third parties to access user profile information or generated identity fingerprints;
an application programming interface to the profile based authentication service exposed to third parties to access correlation model information; or
a data interface to the data store exposed to third parties to query user profile information.

## Patentansprüche

1. Verfahren zum Erzeugen eines Identitätsfingerabdrucks, wobei das Verfahren umfasst:
Verwalten eines Datenspeichers (110) von Datensätzen, wobei die Datensätze sich auf historische Aktivitäten durch eine Vielzahl von Benutzern (102, 120) beziehen und die Datensätze gemäß einem Verhaltenskorrelationsmodell (432) aggregiert wurden;
Empfangen (302) einer Identitätsfingerabdruckanfrage, um einen Identitätsfingerabdruck für einen Benutzer (102) zu erzeugen, wobei die Anfrage Zeichen der Aktivität des Benutzers umfasst;
Abrufen von wenigstens einem Datensatz aus dem Datenspeicher (110), der den Indizien der Aktivität des Benutzers in der Identitätsfingerabdruckanfrage entspricht, wobei der abgerufene Datensatz aus dem Datenspeicher dynamisch abgerufen wird, indem der Datenspeicher nach einem Datensatz abgefragt wird, der den Angaben der Aktivität des Benutzers in der Identitätsfingerabdruckanfrage entspricht;
Erzeugen (314) eines Identitätsfingerabdrucks von dem wenigstens einen abgerufenen Datensatz; und
Servieren (302) des erzeugten Identitätsfingerabdrucks in Reaktion auf die empfangene Identitätsfingerabdruckanfrage.

2. Verfahren nach Anspruch 1, wobei der erzeugte Identitätsfingerabdruck eine Zusammenfassung von historischen Aktivitäten des Benutzers umfasst.

3. Verfahren nach Anspruch 1, wobei der erzeugte Identitätsfingerabdruck eine Inhaltszusammenfassung umfasst, die durch den Benutzer während mindestens einer historischen Aktivität eingegeben wurde.

4. Verfahren nach Anspruch 1, ferner umfassend Sammeln von Verhaltensdaten zum Erzeugen von Identitätsfingerabdrücken, umfassend:
Empfangen einer Sitzungsinitiierungsanfrage, wobei die Sitzungsinitiierungsanfrage eine Benutzerkennung umfasst;
Aktivieren eines Benutzerprofils entsprechend der Benutzerkennung, wobei das Benutzerprofil eine Vielzahl von Ereignissen von Interesse umfasst;
Übertragen der Vielzahl von Ereignissen von Interesse an die Client-Vorrichtung (104), die mit dem Benutzerprofil für die Registrierung assoziiert ist;
Empfangen (310) einer Vielzahl von Benutzerhistory-Aktivitätsanzeigen, wobei jede Anzeige mindestens einem auf der Client-Vorrichtung registrierten Ereignis entspricht, das auf eine Benutzereingabe anspricht, die mindestens ein registriertes Ereignis auslöst;
Konvertieren der empfangenen Vielzahl von Benutzerhistory-Aktivitätsanzeigen in ein Format, das durch ein Korrelationsmodell spezifiziert ist (432);
Speichern (312) der Benutzerhistory-Aktivitätsanzeigen in dem Datenspeicher (110) mit anderen Benutzerhistory-Aktivitätsanzeigen aus anderen Sitzungen; und
Aggregieren (312) der Benutzerhistory-Aktivitätsanzeigen gemäß dem Korrelationsmodell (432).

5. Verfahren nach Anspruch 4, wobei die Benutzerhistory-Aktivitätsanzeigen mit Daten von Drittparteien gemäß dem Korrelationsmodell aggregiert werden.

6. Verfahren nach Anspruch 4, wobei die anderen Benutzerhistory-Aktivitätsanzeigen von anderen Client-Vorrichtungen stammen.

7. Verfahren nach Anspruch 4, wobei die Benutzerhistory-Aktivitätsanzeigen Folgendes umfassen:
Benutzerstandort,
Benutzeranrufmuster,
Benutzer-Nahfeldkommunikationsaktivität,
Benutzer-Internetaktivität,
Benutzer-Kurznachrichtendienstaktivität,
Benutzer-Sozialkommunikationsaktivität,
Benutzer-Zahlungshistorie,
Benutzer-Client-Gerätehistorie, oder
Benutzerbenutzungsmuster.

8. Verfahren nach Anspruch 1, ferner umfassend das Zusammenfassen von Benutzern in Kategorien, umfassend:
Erzeugen (314) eines Identitätsfingerabdrucks für jeden der Vielzahl von Benutzern (102, 120), wobei jeder Identitätsfingerabdruck gemäß einer Ansammlung von Datensätzen gemäß einem Verhaltenskorrelationsmodell (432) erzeugt wurde; und
Zusammenfassen der Identitätsfingerabdrücke in Kategorien gemäß einem Ähnlichkeitsmaß.

9. Verfahren nach Anspruch 8, wobei die Kategorien zum Zusammenfassen der Fingerabdrücke Folgendes umfassen:
gezielte Kundenkategorien für zielgerichtete Werbung,
gezielte Kundenkategorien zur Identifizierung von Kaufmustern, oder
Kategorien von Computer-Sicherheitsangriffen als Teil eines Bedrohungsmodells.

10. Verfahren nach Anspruch 1, ferner umfassend das Authentifizieren einer Identität eines Benutzers, umfassend:
Empfangen von mindestens einem Zeichen einer Benutzeraktivität;
Vorbereiten einer Authentifizierungsanfrage (124), wobei die Authentifizierungsanfrage (124) das mindestens eine Kennzeichen der Aktivität des Benutzers umfasst;
Senden der vorbereiteten Authentifizierungsanfrage (124) an einen Profilierungsdienst (108, 126), wobei der Profilierungsdienst (108, 126) Zugriff auf den Datenspeicher (110) von Datensätzen hat; und
Empfangen einer Authentifizierungsbestimmung basierend darauf, ob die Indizien der Aktivität des Benutzers in der Authentifizierungsanforderung (124) mit mindestens einer Aufzeichnung in dem Datenspeicher (110) korrelieren, wobei die Authentifizierungsanfrage (124) mit der mindestens einen Aufzeichnung korreliert zumindest teilweise auf einem Korrelationsmodell basieren (432).

11. Verfahren nach Anspruch 10, wobei das Verfahren ferner umfasst:
wenn festgestellt wird, dass eine Authentifizierungsanfrage nicht mit mindestens einem Datensatz korreliert ist, wird eine der folgenden Antworten ausgeführt:
Senden eines Indikators zum Beenden der Benutzersitzung,
Protokollieren einer fehlgeschlagenen Authentifizierung,
Senden einer E-Mail-Nachricht der fehlgeschlagenen Authentifizierung,
Senden einer Textnachricht der fehlgeschlagenen Authentifizierung oder Auslösen einer Systemadministratorwarnung.

12. System zum Erzeugen von Identitätsfingerabdrücken, wobei das System umfasst:
einen Profilerfassungsdienst (108), der auf einer Computervorrichtung (208) gehostet ist;
einen profilbasierten Authentifizierungsdienst (126), der auf einer Computervorrichtung (208) gehostet wird, die betriebsmäßig mit dem Profilsammlungsdienst (108) verbunden ist; und
einen Datenspeicher (110), der auf einer Computervorrichtung (128) gehostet ist und betriebsbereit mit dem Profilsammlungsdienst (108) verbunden ist, wobei:
der Profilerfassungsdienst (108) so betreibbar ist, dass er Korrelationsmodellinformationen von dem profilbasierten Authentifizierungsdienst (126) empfängt, um Ereignisinformationen gemäß dem Korrelationsmodell (432) zu übertragen, um historische Benutzerhinweise gemäß dem Korrelationsmodell (432) zu empfangen und um die empfangenen historischen Benutzerangaben in dem Datenspeicher (110) zu speichern,
der Profilerfassungsdienst (108) dazu betreibbar ist, einen Identitätsfingerabdruck basierend auf einigen der gespeicherten historischen Benutzerkennungen und ferner basierend auf mindestens einem abgerufenen Datensatz zu erzeugen, wobei der abgerufene Datensatz aus dem Datenspeicher dynamisch über Abfragen des Datenspeichers abgerufen wird für eine Aufzeichnung, die den Indizien der Aktivität des Benutzers in der Identitätsfingerabdruckanforderung entspricht, und
der Profilerfassungsdienst (108) so betreibbar ist, dass er mindestens einen erzeugten Identitätsfingerabdruck bedient.

13. System nach Anspruch 12, wobei das System ferner umfasst:
einen Cache-Speicher, der betriebsmäßig mit dem Profilerfassungsdienst verbunden ist, wobei der Cache-Speicher mindestens einen erzeugten Identitäts-Fingerabdruck speichert;
wobei der Profilsammlungsdienst betreibbar ist, um mindestens einen erzeugten Identitätsfingerabdruck von dem Cache-Speicher zu bedienen.

14. System nach Anspruch 12, wobei das System ferner eines der Folgenden umfasst:
eine Anwendungsprogrammierschnittstelle zum Profilerfassungsdienst, die Dritten zugänglich gemacht wird, um auf Benutzerprofilinformationen oder erzeugte Identitätsfingerabdrücke zuzugreifen;
eine Anwendungsprogrammierschnittstelle zu dem profilbasierten Authentifizierungsdienst, der Dritten offengelegt ist, um auf Korrelationsmodellinformationen zuzugreifen; oder
eine Datenschnittstelle zu dem Datenspeicher, die Dritten gegenüberliegt, um Benutzerprofilinformationen abzufragen.

## Revendications

1. Procédé pour générer une empreinte d'identité, le procédé comprenant de :
maintenir une mémoire de données (110) d'enregistrements, les enregistrements concernant des activités historiques par une pluralité d'utilisateurs (102, 120) et les enregistrements ayant été agrégés selon un modèle de corrélation comportementale (432) ;
recevoir (302) une demande d'empreinte d'identité pour générer une empreinte d'identité pour un utilisateur (102), la demande comprenant des indices de l'activité de l'utilisateur ;
extraire au moins un enregistrement de la mémoire de données (110) correspondant aux indices de l'activité de l'utilisateur dans la demande d'empreinte d'identité, l'enregistrement extrait de la mémoire de données étant extrait dynamiquement par interrogation de la mémoire de données quant à un enregistrement correspondant aux indices de l'activité de l'utilisateur dans la demande d'empreinte d'identité ;
générer (314) une empreinte d'identité à partir du au moins un enregistrement extrait ; et
desservir (302) l'empreinte d'identité générée en réponse à la demande d'empreinte d'identité reçue.

2. Procédé selon la revendication 1, dans lequel l'empreinte d'identité générée comprend un récapitulatif d'activités historiques de l'utilisateur.

3. Procédé selon la revendication 1, dans lequel l'empreinte d'identité générée comprend un récapitulatif du contenu entré par l'utilisateur au cours d'au moins une activité historique.

4. Procédé selon la revendication 1, comprenant en outre la collecte de données comportementales pour générer des empreintes d'identité, comprenant de :
recevoir une demande d'initiation de session, la demande d'initiation de session comprenant un identifiant d'utilisateur ;
activer un profil d'utilisateur correspondant à l'identifiant d'utilisateur, le profil d'utilisateur comprenant une pluralité d'événements d'intérêt ;
transmettre la pluralité d'événements d'intérêt au dispositif client (104) associé au profil d'utilisateur pour enregistrement ;
recevoir (310) une pluralité d'indices d'activité historique d'utilisateur, chaque des indices correspondant à au moins un événement enregistré sur le dispositif client en réponse à une entrée d'utilisateur qui déclenche au moins un événement enregistré ;
convertir la pluralité reçue d'indices d'activité historique d'utilisateur en un format spécifié par un modèle de corrélation (432) ;
mémoriser (312) les indices d'activité historique d'utilisateur dans la mémoire de données (110) avec d'autres indices d'activité historique d'utilisateur provenant d'autres sessions ; et
agréger (312) les indices d'activité historique d'utilisateur selon le modèle de corrélation (432).

5. Procédé selon la revendication 4, dans lequel les indices d'activité historique d'utilisateur sont agrégés avec des données tierces selon le modèle de corrélation.

6. Procédé selon la revendication 4, dans lequel les autres indices d'activité historique d'utilisateur proviennent d'autres dispositifs clients.

7. Procédé selon la revendication 4, dans lequel les indices d'activité historique d'utilisateur comprennent l'un quelconque parmi :
emplacement d'utilisateur,
schéma d'appel d'utilisateur,
activité de communication en champ proche d'utilisateur,
activité Internet d'utilisateur,
activité de service de messages courts d'utilisateur,
activité de réseaux sociaux d'utilisateur,
historique de paiement d'utilisateur,
historique de dispositif client d'utilisateur, ou
schéma d'utilisation d'utilisateur.

8. Procédé selon la revendication 1, comprenant en outre l'agrégation d'utilisateurs en catégories, comprenant de :
générer (314) une empreinte d'identité pour chacun de la pluralité d'utilisateurs (102, 120), chaque empreinte d'identité ayant été générée selon un agrégat d'enregistrements selon un modèle de corrélation comportementale (432) ; et
agréger les empreintes d'identité en catégories selon une mesure de similarité.

9. Procédé selon la revendication 8, dans lequel les catégories pour agréger les empreintes comprennent l'une quelconque parmi :
catégories de clients ciblées pour de la publicité ciblée,
catégories de clients ciblées pour identifier des schémas d'achat, ou
catégories d'attaques de sécurité informatique comme partie d'un modèle de menace.

10. Procédé selon la revendication 1, comprenant en outre l'authentification d'une identité d'un utilisateur, comprenant de :
recevoir au moins un indice d'une activité de l'utilisateur ;
préparer une demande d'authentification (124), la demande d'authentification (124) comprenant le au moins un indice de l'activité de l'utilisateur ;
envoyer la demande d'authentification préparée (124) à un service de profilage (108, 126), le service de profilage (108, 126) ayant accès à la mémoire de données (110) d'enregistrements ; et
recevoir une détermination d'authentification selon que l'indice de l'activité de l'utilisateur dans la demande d'authentification (124) est en corrélation avec au moins un enregistrement dans la mémoire de données (110), la corrélation de la demande d'authentification (124) avec le au moins un enregistrement étant basée au moins en partie sur un modèle de corrélation (432).

11. Procédé selon la revendication 10, le procédé comprenant en outre de :
lors de la détermination qu'une demande d'authentification n'est pas en corrélation avec au moins un enregistrement, effectuer l'une quelconque des réponses suivantes :
envoyer un indicateur pour terminer la session d'utilisateur,
consigner une authentification échouée,
envoyer un message électronique concernant l'authentification échouée,
envoyer un message textuel concernant l'authentification échouée, ou
déclencher une alerte d'administrateur système.

12. Système pour générer des empreintes d'identité, le système comprenant :
un service de collecte de profils (108) hébergé sur un dispositif informatique (208) ; un service d'authentification basé sur un profil (126) hébergé sur un dispositif informatique (208), connecté de manière opérationnelle au service de collecte de profils (108) ; et
une mémoire de données (110) hébergée sur un dispositif informatique (128) et connectée de manière opérationnelle au service de collecte de profils (108), dans lequel :
le service de collecte de profils (108) est opérationnel pour recevoir des informations de modèle de corrélation provenant du service d'authentification basé sur profil (126), pour transmettre des informations d'événement selon le modèle de corrélation (432), pour recevoir des indices historiques d'utilisateur selon le modèle de corrélation (432), et pour stocker les indices historiques d'utilisateur reçus dans la mémoire de données (110),
le service de collecte de profils (108) est opérationnel pour générer une empreinte d'identité sur la base de certains des indices historiques d'utilisateur stockés et en outre sur la base d'au moins un enregistrement extrait, dans lequel l'enregistrement extrait de la mémoire de données est extrait dynamiquement via interrogation de la mémoire de données quant à un enregistrement correspondant aux indices de l'activité de l'utilisateur dans la demande d'empreinte d'identité, et
le service de collecte de profils (108) est opérationnel pour desservir au moins une empreinte d'identité générée.

13. Système selon la revendication 12, le système comprenant en outre :
une mémoire cache connectée de manière opérationnelle au service de collecte de profils, la mémoire cache stockant au moins une empreinte d'identité générée ;
dans lequel le service de collecte de profils est opérationnel pour desservir au moins une empreinte d'identité générée à partir de la mémoire cache.

14. Système selon la revendication 12, le système comprenant en outre l'une quelconque parmi :
une interface de programmation d'application avec le service de collecte de profils exposée à des tiers pour accéder à des informations de profil d'utilisateur ou à des empreintes d'identité générées ;
une interface de programmation d'application avec le service d'authentification basé sur un profil exposée à des tiers pour accéder à des informations de modèle de corrélation ; ou
une interface de données avec la mémoire de données exposée à des tiers pour interroger quant à des informations de profil d'utilisateur.
